# EUROPÄISCHE PATENTSCHRIFT

(11) **EP 0 857 985 B1**
(45) Veröffentlichungstag und Bekanntmachung des Hinweises auf die Patenterteilung: **22.09.2004**
(21) Anmeldenummer: 98100492.2
(22) Anmeldetag: 14.01.1998
(51) Int. Cl.: G02B 1/02, G02B 7/02, C03C 27/00

(54) **Optisches Glied und Herstellverfahren**
Optical element and manufacturing method therefor
Elément optique et procédé pour la fabrication

(30) Priorität: 10.02.1997 DE 19704936
(43) Veröffentlichungstag der Anmeldung: 12.08.1998
(73) Patentinhaber: Carl Zeiss SMT AG, 73447 Oberkochen (DE)
(72) Erfinder: Schuster, Karl Heinz, 89551 Königsbronn (DE)
(74) Vertreter: Müller-Rissmann, Werner Albrecht, Dr.

(56) Entgegenhaltungen:
- US-A- 5 339 441
- US-A- 5 469 299
- PATENT ABSTRACTS OF JAPAN vol. 017, no. 448 (P-1594), 17.August 1993 & JP 05 100102 A (OLYMPUS OPTICAL CO LTD), 23.April 1993,
- PATENT ABSTRACTS OF JAPAN vol. 018, no. 530 (P-1809), 6.Oktober 1994 & JP 06 186405 A (NIKON CORP), 8.Juli 1994,

## Beschreibung

Die Erfindung betrifft ein optisches Glied, dessen aneinander angesprengten Elemente ohne Luft aneinanderliegen - diese Fügetechnik wird auch als "Ansprengen" oder "physical glue" bezeichnet -, wobei mindestens ein Element aus kristallinem Material besteht (nach Anspruch 1), sowie ein optisches System damit (nach den Ansprüchen 4 und 5), und ferner deren Verwendung. Zugleich betrifft die Erfindung die entsprechenden Herstellverfahren nach den Ansprüchen 7 - 11.

Als Alternative zum Kitten ist das Ansprengen in der Optik-Fertigung verbreitet. Als Fügetechnik für Kristalle funktioniert es aber nur bedingt, besonders bei gekrümmten Flächen. Dort bilden sich nämlich mikroskopische Stufen an Übergängen zwischen Kristallebenen. Speziell bei Fluoriden kommt eine generell geringe Adhäsion dazu.

Speziell für Ultraviolett-Optik, insbesondere für den DUV-Bereich unterhalb 250 nm Wellenlänge, werden Kristalle und besonders Fluoride wie CaF₂, MgF₂, NaF benötigt, da diese zu den wenigen in diesem Wellenlängenbereich transparenten und photochemisch stabilen Werkstoffen gehören, und die Quarzglas durch ihre anderen optischen Eigenschaften z. B. zur Achromatisierung ergänzen können. Auch ihre doppelbrechenden Eigenschaften sind von Bedeutung.

Das Kitten kommt für diesen Wellenlängenbereich aber nicht als Fügetechnik in Frage, da die organischen Klebestoffe allesamt nicht chemisch resistent gegen diese UV-Strahlen sind.

Aufgabe der Erfindung ist es also, einen Weg zu finden, wie kristallines Material ohne Luftzwischenraum und ohne Kitt gefügt werden kann, sowie optische Glieder, Systeme und Fertigungsverfahren mit dieser Technik anzugeben.

Gelöst wird die Aufgabe nach Anspruch 1, indem bei einem gattungsgemäßen optischen Glied ein Element aus kristallinem Material auf der dem anderen Element benachbarten Seite eine amorphe anorganische Schicht aufweist.

Besonders vorteilhaft ist dies nach Anspruch 2, wenn das kristalline Material ein Fluorid ist, da bei diesem Material das Ansprengen besonders schwierig und schwach ist.

Als anorganische Schicht eignet sich besonders Quarzglas nach Anspruch 3, u. a. wegen seiner UV-Transparenz und UV-Beständigkeit.

Damit lässt sich dann auch ein DUV-geeigneter Achromat, z. B. mit Quarzglas und Kalziumfluorid aufbauen, mit angesprengten optischen Gliedern, gemäß Anspruch 4 bzw. 5. Anspruch 6 gibt die Verwendung im UV/DUV-Bereich an.

Anspruch 7 beschreibt das entsprechende Herstellverfahren, wonach ein Element aus kristallinem Material zum Vorbereiten für das Ansprengen mit einer anorganischen amorphen Schicht aus Quarzglas beschichtet wird. Auf das Beschichtungsverfahren kommt es dabei nicht an, es sind zahlreiche bekannt. Gute Haftung und glatte Oberfläche ergibt z. B. das Sputtern.

Bei Bedarf kann die Oberfläche der Schicht gemäß Anspruch 8 noch geglättet werden, z. B. durch Polieren, Tempern, Ionenstrahl, chemisch Polieren.

Eine weitere Verfahrensvariante geben Ansprüche 10 und 11 an.

Auch bei der Herstellung optischer Teile aus Kristall, die im Einsatz nicht an ein anderes Teil angesprengt bleiben, hat die Erfindung gemäß Anspruch 9 ihre Vorteile.

Demnach muss ein teilbearbeiteter Rohling aus Kristall nicht auf einem Linsenträger festgekittet werden, um die gegenüberliegende Seite zu polieren, sondern er kann nach der erfindungsgemäßen Beschichtung angesprengt werden. Kitt entfällt also. Statt auf einen Linsenträger können insbesondere dünne Elemente auch direkt an ein weiteres optisches Bauteil angesprengt werden, mit dem sie auch im Gebrauch vereinigt bleiben.

Näher erläutert wird die Erfindung anhand der Zeichnung.
- Figur 1: zeigt schematisch ein optisches System mit einem Achromaten mit einem Element aus Kristall mit Beschichtung.
- Figur 2: zeigt schematisch eine Optik-Poliermaschine mit an einem Linsenhalter angesprengtem beschichtetem Kristall-Teil beim Polieren.

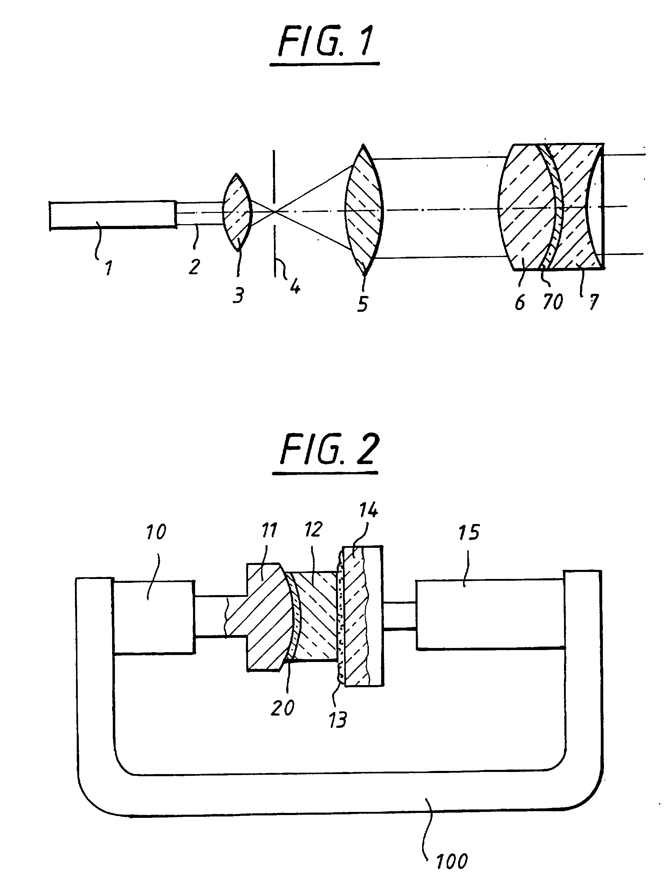

Das optische System der Figur 1 zeigt zunächst eine Lichtquelle 1, vorzugsweise einen Excimer-Laser, der ein Lichtbündel 2 emittiert mit einer Wellenlänge im tiefen Ultraviolett (DUV), z.B. 248 nm, 193 nm oder 157 nm.

Linsen 3 und 5 mit Blende 4 sind eine Strahlaufweitungseinheit, die Linsen 6 und 7 liegen ohne Luft aneinander, sind also angesprengt und bilden einen Achromaten, wobei die Linse 6 aus Quarzglas, die Linse 7 aus kristallinem Material, z.B. einem Fluorid wie CaF₂, MgF₂ oder NaF besteht. Diese Materialien sind im DUV-Bereich brauchbar.

Normales Ansprengen der Kristall-Linse 7 an die Quarzlinse 6 ist prinzipiell zwar möglich, aber nicht praktikabel und nicht stabil. Verbinden mit Optik-Kitt, also einem organischen Kleber, scheidet aus, da diese Materialien gegen DUV-Bestrahlung chemisch nicht stabil sind. Durch die erfindungsgemäß auf die Linse 7 aufgebrachte dünne Quarzschicht 70 - im Bild übertrieben dick dargestellt - wird das Ansprengen problemlos möglich und sehr stabil. Optische Wirkung hat die dünne Schicht 70 keine, da sie mit dem Material der Linse 6 übereinstimmt.

Das optische System kann z.B. Teil einer Mikrolithographie-Projektionsbelichtungsanlage sein.

Außer zur Achromatisierung eignen sich optische Elemente aus kristallinem Werkstoff wegen ihrer doppelbrechenden Eigenschaften besonders auch für polarisationsoptische Elemente. Dazu sind dann bevorzugt dünne Planplatten geeignet, welche aus Stabilitätsgründen im Gebrauch, aber auch schon bei der Fertigung, an massive Planplatten, zum Beispiel aus Quarzglas oder Flußspat, angesprengt werden können, wenn sie erfindungsgemäß beschichtet sind.

Damit sind dann dünne optische Elemente aus kristallinem Werkstoff mit Dicken bis in den Mikrometerbereich hinunter machbar.

Die Bearbeitung eines angesprengten optischen Kristallteils 12 mit Beschichtung 20 zeigt Figur 2. Das Kristallteil 12 ist auf dem Linsenträger 11 angesprengt, der in einem Halter 10, eventuell mit Drehantrieb, der Linsenschleifmaschine 100 angeordnet ist. Die freie Fläche des Kristallteils 12 wird mit Poliermittel 13 mit dem Polierwerkzeug 14, das seinerseits vom Antrieb 15 gedreht wird, poliert.

Der Linsenträger 11 kann schon eine nutzbare Linse enthalten, an der das Kristallteil 12 auch auf Dauer verbleibt. Sonst wird das Kristallteil 12 nach der Fertigbearbeitung wieder abgesprengt.

Die dünne Schicht 20 kann mit allen bekannten Techniken der Herstellung dünner Schichten aufgebracht und nachbehandelt werden. Bewährt hat sich das Aufsputtern von Si0₂ auf MgF₂, was eine gut haftende Schicht mit guter Glättungswirkung ergibt.

Die dünne Schicht 20 kann auch aus dem gleichen Stoff, aber in amorpher Form, wie das Kristallteil 12 bestehen, wobei dann natürlich die Adhäsion nicht verbessert ist, aber die Glättung wirkt. In diesem Fall kann sie auch durch Umwandlung der Oberflächenzone, z.B. mit Laserumschmelzen, erzeugt werden.

## Patentansprüche

1. Optisches Glied, mit zwei aneinander angesprengten Elementen (6,7), die ohne Luft aneinanderliegen, wobei mindestens ein Element (7) aus kristallinem Material besteht, **dadurch gekennzeichnet, dass** ein Element (7) aus kristallinem Material auf der dem anderen Element (6) benachbarten Fläche eine amorphe anorganische Schicht (70) aufweist und mit dieser Schicht an das andere Element (6) angesprengt ist.

2. Optisches Glied nach Anspruch 1, **dadurch gekennzeichnet, dass** das kristalline Material ein Fluorid ist.

3. Optisches Glied nach Anspruch 1 oder 2, **dadurch gekennzeichnet, dass** die amorphe anorganische Schicht (70) aus Quarzglas besteht.

4. Optisches System enthaltend mindestens ein optisches Glied nach mindestens einem der Ansprüche 1- 3, **dadurch gekennzeichnet, dass** die Elemente (6, 7) aus zwei verschiedenen Materialien bestehen.

5. Optisches System enthaltend mindestens ein optisches Glied nach mindestens einem der Ansprüche 1 - 3, **dadurch gekennzeichnet**, das eine Lichtquelle (1) mit UV-Licht, vorzugsweise DUV-Licht, vorhanden ist.

6. Verwendung eines optischen Gliedes nach mindestens einem der Ansprüche 1- 3 oder eines optischen Systems nach Anspruch 4 oder 5, in einem optischen System mit Ultraviolett-, insbesondere DUV-Lichtquelle (1).

7. Verfahren zum Vorbereiten eines ersten Elements (12) aus kristallinem Material, insbesondere aus einem Fluorid, für das Ansprengen an ein zweites Element, **dadurch gekennzeichnet, dass** auf die Ansprengfläche eine anorganische amorphe Schicht (20) aus Quarzglas zum Ansprengen an das zweite Element aufgebracht wird.

8. Verfahren nach Anspruch 7, **dadurch gekennzeichnet, dass** die Schicht (20) geglättet wird.

9. Verfahren zur Herstellung eines dünnen optischen Elements aus kristallinem Material, insbesondere mit einer geringsten Dicke von weniger als 5 mm oder von weniger als 5 % des Durchmessers, **dadurch gekennzeichnet, dass** ein Rohling aus diesem kristallinen Material auf einer Fläche auf Endform des optischen Elements optisch bearbeitet wird, anschließend mit einer amorphen anorganischen Schicht belegt wird, bedarfsweise die Schicht poliert wird, das halbfertige optische Element mit der Schicht an ein Teil, insbesondere einen Linsenhalter für Poliermaschinen angesprengt wird, und dann die gegenüberliegende Seite des Elements auf Endform optisch bearbeitet wird.

10. Ansprengverfahren, bei dem ein erstes optisches Element (7) aus kristallinem Material, insbesondere aus Fluorid, durch Aufbringen einer anorganischen amorphen Schicht (70) insbesondere aus Quarzglas, vorbereitet wird und danach an ein zweites optisches Element (6) angesprengt wird.

11. Verfahren nach Anspruch 10, **dadurch gekennzeichnet, dass** die Schicht (70) geglättet wird.

## Claims

1. Optical component having two mutually wrung elements (6, 7) which bear against one another without air, at least one element (7) consisting of crystalline material, **characterized in that** one element (7) of crystalline material has an amorphous inorganic layer (70) on the surface adjacent to the other element (6) and is wrung onto the other element (6) with this layer.

2. Optical component according to Claim 1, **characterized in that** the crystalline material is a fluoride.

3. Optical component according to Claim 1 or 2, **characterized in that** the amorphous inorganic layer (70) consists of silica glass.

4. Optical system including at least one optical component according to at least one of Claims 1-3, **characterized in that** the elements (6, 7) consist of two different materials.

5. Optical system including at least one optical component according to at least one of Claims 1-3, **characterized in that** a light source (1) with UV light, preferably DUV light, is present.

6. Use of an optical component according to at least one of Claims 1-3, or of an optical system according to Claim 4 or 5, in an optical system with an ultraviolet, in particular a DUV light source (1).

7. Method for preparing a first element (12) of crystalline material, in particular of a fluoride, for wringing onto a second element, **characterized in that** an inorganic amorphous layer (20) of silica glass for wringing onto the second element is applied to the wringing surface.

8. Method according to Claim 7, **characterized in that** the layer (20) is smoothed.

9. Method for producing a thin optical element of crystalline material, in particular having a very small thickness of less than 5 mm or of less than 5% of the diameter, **characterized in that** a blank made from this crystalline material is optically worked on a surface to produce the final shape of the optical element, and subsequently has an amorphous inorganic layer applied to it, the layer is polished if required, the semifinished optical element with the layer is wrung onto a part, in particular a lens holder for polishing machines, and then the opposite side of the element is optically worked to the final shape.

10. Wringing method in which a first optical element (7) of crystalline material, in particular of fluoride, is prepared by the application of an inorganic amorphous layer (70), particularly of silica glass, and thereafter is wrung onto a second optical element (6).

11. Method according to Claim 10, **characterized in that** the layer (70) is smoothed.

## Revendications

1. Elément optique avec deux éléments (6, 7) accolés l'un à l'autre, qui sont disposés sans air l'un contre l'autre, au moins un élément (7) se composant d'un matériau cristallin, **caractérisé en ce qu'**un élément (7) en matériau cristallin possède, sur la face adjacente à l'autre élément (6), une couche inorganique amorphe (70), et **en ce qu'**il est accolé à l'autre élément (6) par cette couche.

2. Elément optique selon la revendication 1, **caractérisé en ce que** le matériau cristallin est un fluorure.

3. Elément optique selon la revendication 1 ou 2, **caractérisé en ce que** la couche inorganique amorphe (70) se compose de verre quartzeux.

4. Système optique comprenant au moins un élément optique selon au moins l'une des revendications 1 - 3, **caractérisé en ce que** les éléments (6, 7) se composent de deux matériaux différents.

5. Système optique comprenant au moins un élément optique selon au moins l'une des revendications 1 - 3, **caractérisé par** la présence d'une source lumineuse (1) avec une lumière UV, de préférence une lumière DUV.

6. Utilisation d'un élément optique selon au moins l'une des revendications 1 - 3 ou d'un système optique selon la revendication 4 ou 5 dans un système optique avec une source lumineuse (1) ultraviolette, notamment DUV.

7. Procédé pour la préparation d'un premier élément (12) en un matériau cristallin, notamment un fluorure, pour l'accolement à un second élément, **caractérisé en ce qu'**une couche inorganique amorphe (20) en verre quartzeux est déposée sur la surface d'accolement, pour l'accolement au second élément.

8. Procédé selon la revendication 7, **caractérisé en ce que** la couche (20) est lissée.

9. Procédé pour la fabrication d'un élément optique mince en un matériau cristallin, en particulier avec une épaisseur la plus faible inférieure à 5 mm ou inférieure à 5 % du diamètre, **caractérisé en ce qu'**une pièce brute de ce matériau cristallin est usinée optiquement sur une face pour obtenir la forme finale de l'élément optique, qu'elle est ensuite revêtue d'une couche inorganique amorphe, que la couche est polie si nécessaire, que l'élément optique semi-fini est accolé par la couche à une pièce, en particulier un support de lentille pour des machines à polir, et **en ce que** le côté opposé de l'élément est alors usiné optiquement pour obtenir la forme finale.

10. Procédé d'accolement dans lequel un premier élément optique (7) en un matériau cristallin, notamment un fluorure, est préparé par revêtement d'une couche inorganique amorphe (70), notamment en verre quartzeux, et est ensuite accolé à un second élément optique (6).

11. Procédé selon la revendication 10, **caractérisé en ce que** la couche (70) est lissée.
